# EUROPEAN PATENT APPLICATION

(11) **EP 2 952 555 A1**
(43) Date of publication of application: **09.12.2015**
(21) Application number: 14746608.0
(22) Date of filing: 10.01.2014
(51) Int. Cl.: C10G 53/02, C01B 3/50, C01B 3/00, B01D 3/16, B01D 45/14, B01D 45/16, B01D 50/00

(54) **METHOD AND APPARATUS FOR IMPROVING HYDROGEN UTILIZATION RATE OF HYDROGENATION APPARATUS**

(30) Priority: 30.01.2013 CN 201310037577; 17.06.2013 CN 201310239487
(71) Applicant: East China University Of Science And Technology, Shanghai 200237 (CN)
(72) Inventor: YANG, Qiang, Shanghai 200237 (CN); XU, Xiao, Shanghai 200237 (CN); LU, Hao, Shanghai 200237 (CN); WANG, Chaoyang, Shanghai 200237 (CN)
(74) Representative: Lang, Christian
(86) International application number: PCT/CN2014/000029
(87) International publication number: WO 2014/117633

(57) **Abstract**

A method and apparatus for improving a hydrogen utilization rate in a hydrogenation hot high-pressure separation process. Hydrogenated distillate oil, a gas product and hydrogen pass through an inertia separation distributor arranged in an inlet of a hot high-pressure separator under high pressure for preliminary gas-liquid separation, and a gas phase goes to a subsequent system; a liquid phase goes into a hot low-pressure separator. Releases a part of low-pressure separated gas (mainly hydrogen) after preliminary separation through an injection flash separator in the hot low-pressure separator, and is divided into a gas phase and a liquid phase based on gravitational settling; hydrogen and some micro bubbles that are still dissolved in hot low-pressure separated oil under the pressure are separated from the oil through a centrifugal degassing device; the gas phase exits from the apparatus after carried liquid droplets are removed completely through hydrocyclone separation separation or coalescence separation, and distillate oil goes to a subsequent facility.

## Description

### Technical Field:

The invention is in related to the field of producing hydrocarbon oil with hydrogen, especially related to a method and device improving the hydrogen utilization in a hydrogenation high pressure hot separation process using combined technologies of inertia separation, jet flash and centrifugal degassing.

### Technical Background:

With the crude oil resource becoming scarce and its quality becoming poorer and poorer, the addition of hydrogen into distillate has been widely applied in the production of clean fuel. In addition, the addition of hydrogen into distillate is also applied in the shale gas, natural gas and coal chemical industry in order to obtain clean fuel.

In the traditional procedure of adding hydrogen into distillate, a large quantity of hydrogen is needed in order to guarantee the partial pressure of hydrogen, wherein a small part of the hydrogen is consumed via hydrogenation reaction, whereas the majority of the hydrogen is recycled via circulating hydrogen compressor. The reaction products of hydrogenation of conventional resid, hydrocracking, hydrotreating, hydroupgrading, hydrofining and other medium and high pressure hydrogenation process are separated usually through cold high separation or hot high separation process. The cold high separation process is a process wherein all the reaction products undergo liquid-gas separation after going through air cooler. The hot high separation process is a process wherein all of the reaction products first undergo a gas-liquid separation under a certain temperature and the flashed mixture undergoes second separation via heat exchange as well as air cooling. Hot high separation and cold high separation have both been widely applied in hydrogenation devices domestically and abroad. The core problem in selecting between these two processes lies in the economic comparison of these two processes. The advantages of hot high separation are: reducing energy consumption of the device, reducing cold exchange area, reducing the occurrence the congelation of the air coolers in cold areas, in full circulation processes, it prevents blockage of high pressure coolers because of the accumulation of polycyclic aromatic hydrocarbons. Its disadvantages are: increasing high temperature oil-gas separation system, increasing hydrogen loss, the concentration of circulation hydrogen is a bit lower than that in the cold high separation process, which leads to a slight increase of the pressure of the whole system. The prerequisite of applying hot high separation process is an effective recovering of the hydrogen. The hydrogen dissolved in the cold low separated oil and the hot low separated oil is usually considered as part of the hydrogen lost.

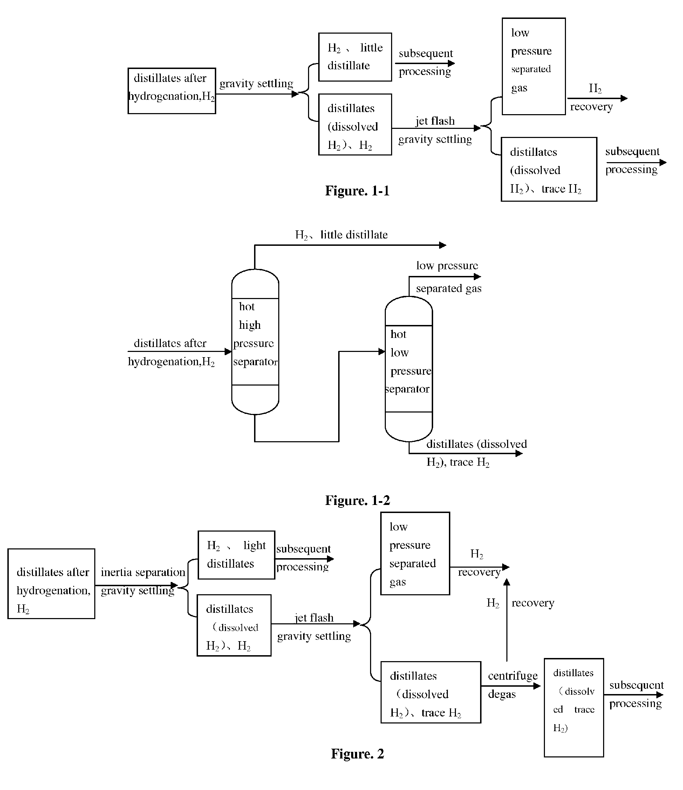

In the hot high separation process, hydrogen and hydrogenated distillate undergo gas-liquid phase separation under certain temperature and pressure in the hot high pressure separator, wherein gravity settling is used for the separation. The gas phase in the hot high pressure separator goes through a recycling hydrogen compressor and is conducted back to the reaction system after its pressure is increased. The liquid phase of the hot high pressure separator undergoes reduced pressure jet flash and releases low pressure separated gas under certain temperature and pressure of the hot low pressure separator. The hydrogen content of the low pressure separated gas is around 70%. Usually this low pressure separated gas is conducted into PSA recycling device as hydrogen rich gas after gravity settling to recover the hydrogen present therein. In general, the pressure of the hot low pressure separator of the high pressure hydrogenation device is designed to be 1.2-3.0 MPa (G) in order to guarantee that the low pressure separated oil is conducted into the fractionating tower by pressure. The hydrogen separated from the fractionating tower cannot be recycled to be used as natural gas due to its low concentration, which leads to a low utilization efficiency of the hydrogen. Due to the fact that the liquid and the gas phase in the hot high pressure separator as well as in the cold high pressure separator is separated by natural gravity settling, as shown in Fig. 1, it is unavoidable that part of the gas (majorly hydrogen) is present as bubbles in the liquid phase which is conducted into subsequent devices, and this leads to a loss of hydrogen. In addition, a hot low pressure separator uses the traditional jet flash-gravity settling method. The contact surface between the liquid and the gas phase under a certain dwell time period is small, which leads to a low efficiency of jet flash and hence a loss of part of hydrogen. Finally, since the pressure of the hot low pressure separator is 1.2-3.0 MPa (G), under this pressure, part of the hydrogen can still be dissolved in the liquid phase, which also leads to a loss of hydrogen. Therefore a more effective method is needed to recycle this part of the hydrogen, which is beneficial to the organization economic wise.

### Content of the invention:

In order to overcome the disadvantages above, the present invention provides a method and device improving the hydrogen utilization in a hydrogenation high pressure hot separation process.

After hydrogenation, the distillate, gas products and hydrogen undergo an initial gas-liquid separation under high pressure through the inertia separation distributor located at the inlet of the hot high pressure separator. In order to increase the separation efficiency, the gas phase returns to the reaction system via recycling hydrogen compressor after going through cold high pressure and subsequent devices. The liquid phase undergoes initial separation and releases a part of the low pressure separated gas (majorly hydrogen) through jet flash. The gas phase separated is further separated into gas phase and liquid phase via gravity settling. The gas which is still dissolved in the distillate under this pressure and part of the small bubbles is further separated through a second step centrifugal degassing. With the pressure gradient of the centrifugal degassing device (on the radial cross section, the pressure is inwardly gradually decreasing) as well as the centrifugal field, the gas dissolved in the distillate is separated out due to the partial pressure of the pressure gradient field. The separated gas and the small bubbles are further separated by the centrifugal field. The gas phase is removed of liquid drops via hydrocyclone separation or coalescing separation and exists the device, while the distillate is conducted into subsequent device. The method and the device of the present invention overcomes the drawbacks of the state of the art and increases the hydrogen utilization.

Concrete technical solution:
A method for improving the hydrogen utilization in a hydrogenation high pressure hot separation process, comprising the following steps:
   Step 1: After hydrogenation, the distillate, gas products and hydrogen undergo an initial gas-liquid separation under high pressure through the inertia separation distributor located at the inlet of the hot high pressure separator. The pressure drop of the inertia separation distributor is 0.0001-0.01 MPa. A second separation is carried out via gravity settling. The separated gas phase is conducted into subsequent device after hydrocyclone separation or coalescing separation, while the liquid phase is conducted into the hot low pressure separator. The interior operation pressure in the hot high pressure separator is 2-30MPa, and the operation temperature is 200-270°C.
   Step 2: The gas phase dissolved in the distillate which enters the hot low pressure separator is first separated by using jet flash technology. The pressure drop of the process is no higher than 0.01 MPa. Then the gas-liquid phase which separated out by jet flash is separated through gravity settling. The liquid phase undergoes centrifugal degassing in order to degass the distillate for the second time through swirling or the centrifugal pressure gradient, wherein the pressure difference in the pressure gradient field is 0.01-10 MPa. The gas phase separated exists the hot low pressure separator from the top after undergoing hydrocyclone or coalescing separation. The liquid phase separated exits the hot low pressure separator from the bottom. The operation pressure of the hot low pressure separator is 0.6-5MPa, and the operation temperature is 170-240°C.

A device to carry out the method for improving the hydrogen utilization in a hydrogenation high pressure hot separation process, comprising a hot high pressure separator as well as a hot low pressure separator, wherein the hot high pressure separator is furnished with an inlet, an outlet for liquid phase and an outlet for gas phase, and the hot low pressure separator is furnished with an inlet, an outlet for liquid phase and an outlet for gas phase, and wherein the outlet for liquid phase of the hot high pressure separator is connected with the inlet of the hot low pressure separator, characterized in that,
- the hot low pressure separator is furnished with a jet flash separator at its inlet, wherein the jet flash separator comprises at least one jet flash core tubes;
- the hot low pressure separator is furnished with at least one centrifugal degassing core tube in front of the outlet for the liquid phase, wherein the centrifugal degassing core tube comprises a cavity, wherein the cavity is furnished with a slanted inlet for liquid and gas phase, and outlet for gas phase and an outlet for liquid phase, wherein the outlet for gas phase is inserted into the cavity through the upper surface of the cavity, wherein the depth of the insertion is around 0.1-3 times of the maximum diameter of the cavity.

Furthermore, the hot high pressure separator is vertical or horizontal, and is furnished with at least one inertia separation distributor, wherein the inertia separation distributor comprises a plurality of inertia separation distribution blades, an upper cover plate, and a lower cover plate on both sides of the inertia separation distributor, wherein each inertia guide blade comprises a guide straight line section, an angle of semicircle and a distribution straight line section, wherein the guide straight line section is the section close to distributor. The inertia separation distribution blades can form only one layer or can form a plurality of layers.

Furthermore, the upper cover plate and the lower cover plate are slanted to the edge, wherein the slanting angle is 3-60°C.

Furthermore, a gas-liquid separator is located at the outlet for gas phase of the hot high pressure separator and/or at the outlet for gas phase of the hot low pressure separator.

Furthermore, the gas-liquid separator is a hydrocyclone separator or a coalescing separator.

Furthermore, the hot low pressure contains a plurality of jet flash core tubes, wherein the jet flash core tubes are parallel connected with each other and are evenly separated along the cross section of the hot low pressure separator. Through the jet flash core tubes, the flow velocity can be increased 1-20 times.

Furthermore, a corresponding umbrella shaped liquid distributor is located at the outlet of the jet flash separator. The surface area of the umbrella shaped liquid distributor is 1-30 times the outlet surface of the jet flash core tube.

Furthermore, the hot low pressure separator comprises a plurality of centrifugal degassing core tubes, wherein the centrifugal degassing core tubes are parallel connected with each other and are evenly separated along the cross section of the hot low pressure separator.

Furthermore, the hot low pressure separator also comprises a baffle plate which divides the hot low pressure separator into two chambers. The height of the baffle plate corresponds to the height of the centrifugal degassing core tubes in order to keep the inlet of the centrifugal degassing core tube and the liquid phase outlet in two different chambers.

The advantages of the current invention are: first, the present invention utilizes inertia separation distribution to enhance gas-liquid separation and to increase the separation efficiency of the hydrogen in the hot high pressure separator. Secondly, jet flash and liquid umbrella shaped even distribution technologies increase the jet flash degassing efficiency. Under the gravity field, the gas carried by the distillate and the dissolved gas released by pressure drop are first separated. Then a second separation is carried out using centrifugal degassing method to separate the gas dissolved under the operation pressure in the hot low pressure separator which cannot be removed by jet flash, and to separate the small bubbles dispersed in the distillate separated by jet flash which cannot be removed by gravity settling. The gas dissolved under the partial pressure is separated through pressure gradient of the centrifugal liquid-gas separation (the pressure gradually decreases inwards along the cross section). The small bubbles dispersed in the distillate are removed effectively by the centrifugal field.

In the method of the present invention, if jet flash is still needed to recover the hydrogen in the distillate from the hot low pressure separator, centrifugal degassing method can be used directly to separate the gas carried by and dissolved in the distillate. In this way, the energy consumption for pressure increase after pressure decrease of liquid phase can be effectively reduced.

The device of the present invention is easy to operate, occupies little space and has a high degassing efficiency. It overcomes the problem of huge hydrogen loss in the hot high pressure separation process and can be widely applied in the hydrogenation process of distillate.

### Figures:

Fig. 1-1 is a schematic diagram of a conventional process in the prior art.
Fig. 1-2 is a schematic diagram of a conventional device in the prior art.
Fig. 2 is a schematic diagram of the process of the current invention.

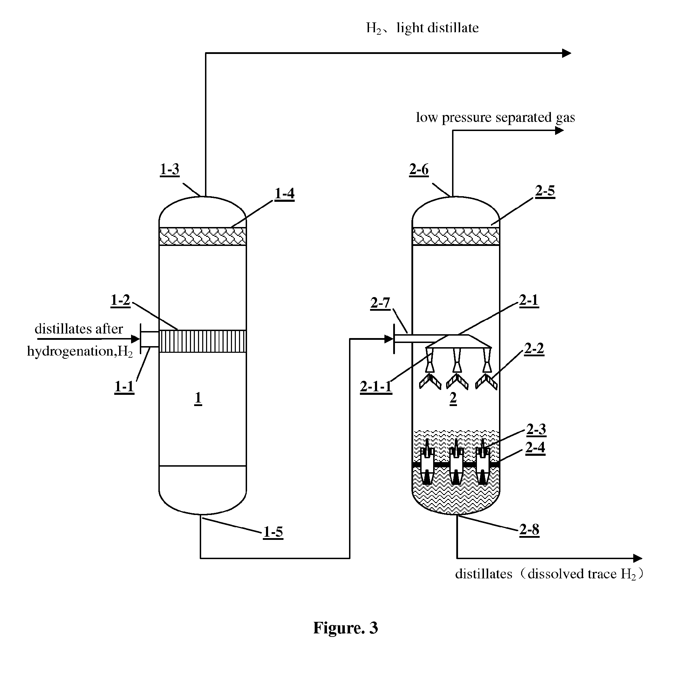

Fig. 3 is a schematic diagram of the device in the first example of the present invention.
Fig. 4 is a schematic diagram of the device in the second example of the present invention.
Fig. 5-1 is a top view of the inertia separation distributor at the inlet of the hot high pressure separator.
Fig. 5-2 is a left view of the inertia separation distributor at the inlet of the hot high pressure separator.
Fig. 6-1 is a schematic diagram of the structure of the centrifugal degassing core tube.
Fig. 6-2 is a radial pressure diagram of the cross section along A-A of the centrifugal degassing core tube.
Fig. 6-3 is a simulation diagram of the pressure gradient distribution of the radial section of the centrifugal degassing core tube.
Fig. 7 shows the structural details of the centrifugal degassing core tube.

### Reference numeral:

1. Hot high pressure separator;
   1-1 inlet of the hot high pressure separator;
   1-2 inertia separation distributor;
   1-3 gas phase outlet of the hot high pressure separator;
   1-4 gas liquid separator;
   1-5 liquid phase outlet of the hot high pressure separator;
2. hot low pressure separator;
   2-1 jet flash separator;
      2-1-1 jet flash core tube;
   2-2 umbrella shaped liquid distributor;
   2-3 centrifugal degassing device;
      2-3-1 centrifugal degassing core tube;
   2-4 baffle plate;
   2-5 gas liquid separator;
   2-6 gas phase outlet of the hot low pressure separator;
   2-7 inlet of the hot low pressure separator;
   2-8 liquid phase outlet of the hot low pressure separator;
      1-1-1 inlet conduit of the hot high pressure separator;
      1-2-1 inertia separation distributor blade;
      1-2-2 upper cover plate;
      1-2-3 bottom cover plate;
3. second hot low pressure separator.
   2-3-1-1-1 liquid-gas axial flow inlet
   2-3-1-1-2 tangential inlet for liquid and gas
   2-3-1-2 column shaped cavity
   2-3-1-3 cone shaped cavity
   2-3-1-4 outlet for liquid of the centrifugal degassing core tube
   2-3-1-5 endocone
   2-3-1-6 thick wall of the inverted cone of the overflow pipe
   2-3-1-7 outlet for the secondary fluid
   2-3-1-8 circular groove gap
   2-3-1-9 secondary separation jet overflow pipe
   2-3-1-9-1 bell mouth
   2-3-1-9-2 column cavity of the first overflow pipe
   2-3-1-9-3 inverted cone shaped connection cavity
   2-3-1-9-4 column cavity of the second overflow pipe
   2-3-1-9-5 barrel body

### Examples:

The current invention provides a device to carry out the method for improving the hydrogen utilization in a hydrogenation high pressure hot separation process, comprising a hot high pressure separator as well as a hot low pressure separator, wherein the hot high pressure separator is furnished with an inlet, an outlet for liquid phase and an outlet for gas phase, and the hot low pressure separator is furnished with an inlet, an outlet for liquid phase and an outlet for gas phase, and wherein the outlet for liquid phase of the hot high pressure separator is connected with the inlet of the hot low pressure separator, characterized in that,
- the hot low pressure separator is furnished with a jet flash separator at its inlet, wherein the jet flash separator comprises at least one jet flash core tubes;
- the hot low pressure separator is furnished with at least one centrifugal degassing core tube in front of the outlet for the liquid phase, wherein the centrifugal degassing core tube comprises a cavity, wherein the cavity is furnished with a slanted inlet for liquid and gas phase, and outlet for gas phase and an outlet for liquid phase, wherein the outlet for gas phase is inserted into the cavity through the upper surface of the cavity, wherein the depth of the insertion is around 0.1-3 times of the maximum diameter of the cavity.

The method for improving the hydrogen utilization in a hydrogenation high pressure hot separation process of the present invention comprises the following steps: After hydrogenation, the distillate, gas products and hydrogen undergo an initial gas-liquid separation under high pressure through the inertia separation distributor located at the inlet of the hot high pressure separator. The pressure drop of the inertia separation distributor is 0.0001-0.01 MPa. A second separation is carried out via gravity settling. The separated gas phase (recycling hydrogen and part of the light distillate) is conducted into subsequent device after hydrocyclone separation or coalescing separation, while the liquid phase (the distillate and the dissolved gas) is conducted into the hot low pressure separator. The gas phase dissolved in the distillate which enters the hot low pressure separator is first separated by using jet flash technology. The pressure drop of the process is no higher than 0.01 MPa. Then the gas-liquid phase which separated out by jet flash is separated through gravity settling. The liquid phase undergoes centrifugal degassing in order to degass the distillate for the second time through swirling or the centrifugal pressure gradient, wherein the pressure difference in the pressure gradient field is 0.01-10 MPa. After jet flash separation, the gas phase (low pressure separated gas, majorly hydrogen) is recovered by PSA, whereas the liquid phase and the dissolved gas as well as the small bubbles carried undergo secondary degassing in the centrifugal degassing device. The liquid (distillate) then exists from the bottom of the device and the gas phase exists from the top and is recovered in PSA.

By the implementation of the current invention, the low problem of low separation efficiency of gravity settling for the gas-liquid phase in the hot high pressure separator and the hot low pressure separator in the hydrogenation process can be solved. The loss of part of the hydrogen as bubbles present in the liquid phase which is conducted into the subsequent device can be avoided. In addition, it is avoided that hydrogen is lost due to the low efficiency of jet flash which is caused by the small contact surface between the liquid and the gas phase under a certain dwell time period since a hot low pressure separator uses the traditional jet flash-gravity settling method. Finally it is avoided that part of the hydrogen is dissolved in the liquid phase due to the fact that the pressure of the hot low pressure separator is 1.2-3.0 MPa (G). The implementation of the present invention increases the hydrogen utilization efficiency which is beneficial to the enterprise.

### Example 1:

A certain hydrogenation device utilizes a hot high pressure separation process, wherein the parameters of the hot high pressure separator is as follows:

| Name | | Unit |
|---|---|---|
| Name of the material | Hydrogen, oil gas, oil, H₂S, NH₃ | |
| Total flow | 433290 | kg/h |
| Gas phase | 81520 | kg/h |
| Oil phase | 351770 | kg/h |
| Liquid phase | | kg/h |
| Operation temperature - highest/normal/lowest | /210/ | °C |
| Operation pressure - highest/normal/lowest | 8.4/8.3/ | MPa(g) |
| Vacuum or negative pressure - highest/lowest | Total vacuum | MPa(abs) |
| Medium density -under operation temperature | | |
| Gas phase | 18.3969 | kg/m³ |
| Oil phase | 733.4492 | kg/m³ |

| | | |
|---|---|---|
| Note: In the initial phase of the operation: the H₂ concentration in the gas phase is 73.8946% (v), the concentration of H₂S in the liquid phase is 0.177% (wt). By the end phase of the operation: the concentration of H₂ in the gas phase is 73.7534% (v), the concentration of H₂S is 1.3705% (v), and the concentration of H₂S in the liquid phase is 0.132% (wt). | | |

Referring to Fig. 1-1 and Fig. 1-2, the conventional hydrogenation hot high pressure separation process is as follows: After hydrogenation, the distillate, the gas product and hydrogen first enter the hot high pressure separator 1 and undergo gas-liquid separation under certain temperature and pressure. Gravity settling is used as the separation method, and the separated gas phase is conducted to the subsequent devices while the liquid phase enters the hot low pressure separator 2 and undergoes jet flash. The gas phase and the liquid phase after jet flash undergo further separation by gravity settling. The separated gas phase (low pressure separated gas) enters PSA to recover hydrogen, while the liquid phase undergoes desulfurization and fractionation. Due to the fact that the liquid and the gas phase in the hot high pressure separator as well as in the cold high pressure separator is separated by natural gravity settling, it is unavoidable that part of the gas (majorly hydrogen) is present as bubbles in the liquid phase which is conducted into subsequent devices, and this leads to a loss of hydrogen. In addition, a hot low pressure separator uses the traditional jet flash-gravity settling method. The contact surface between the liquid and the gas phase under a certain dwell time period is small, which leads to a low efficiency of jet flash and hence a loss of part of hydrogen. Finally, since the pressure of the hot low pressure separator is 1.2-3.0 MPa (G), under this pressure, part of the hydrogen can still be dissolved in the liquid phase, which also leads to a loss of hydrogen. Therefore a more effective method is needed to recycle this part of the hydrogen, which is beneficial to the organization economic wise.

In comparison with the conventional process, the present example utilizes the method and device of the current invention. Fig.1 and Fig. 2 show the schematic diagrams of the device and process of the first example. The device comprises a hot high pressure separator 1 with an inlet 1-1, and outlet for liquid phase 1-5 and an outlet 1-3 of gas phase, as well as a hot low pressure separator 2 with an inlet 2-7, an outlet 2-8 for liquid phase, and an outlet for gas phase 2-6. The outlet for liquid phase 1-5 of the hot high pressure separator 1 is connected with the inlet 2-7. The hot low pressure separator is furnished with a jet flash separator 2-1 at its inlet 2-7, wherein the jet flash separator 2-1 comprises at least one jet flash core tubes 2-1-1. The jet flash core tubes 2-1-1 are parallel connected with each other and are evenly separated along the cross section of the hot low pressure separator 2. The liquid flow rate can be increased 1-20 times through the jet flash core tubes. A corresponding umbrella shaped liquid distributor 2-2 is located at the spray outlet of each of the jet flash core tube 2-1-1. The surface area of the umbrella shaped liquid distributor 2-2 is 1-30 times the outlet surface of the jet flash core tube. The hot low pressure separator 2 comprises a plurality of centrifugal degassing core tubes 2-3, wherein the centrifugal degassing core tubes 2-3 are parallel connected with each other and are evenly separated along the cross section of the hot low pressure separator. A gas-liquid separator 1-4 is located at the outlet for gas phase of the hot high pressure separator 1 and a gas-liquid separator 2-5 is located at the outlet for gas phase of the hot low pressure separator 2. The gas-liquid separator 1-4, 2-5 is a hydrocyclone separator or a coalescing separator. The hot low pressure separator 2 also comprises a baffle plate2-4 which divides the hot low pressure separator 2 into two chambers. The height of the baffle plate 2-4 corresponds to the height of the centrifugal degassing core tubes 2-3 in order to keep the inlet of the centrifugal degassing core tube 2-3 and the liquid phase outlet in two different chambers.

After hydrogenation, the distillate, gas products and hydrogen undergo an initial gas-liquid separation under high pressure through the inertia separation distributor located at the inlet of the hot high pressure separator. The operation pressure of the hot high pressure separator is 8.3 MPa (G) and the pressure drop of the inertia separation distributor is 0.0004 MPa. A second separation is carried out via gravity settling. The separated gas phase is conducted into subsequent device after hydrocyclone separation, wherein the pressure drop of this step 0.005 MPa. The liquid phase is conducted into the hot low pressure separator. The gas phase dissolved in the distillate which enters the hot low pressure separator is first separated by using jet flash technology, wherein the pressure drop of this step is 0.001 MPa. The interior operation pressure in the hot low pressure separator is 2.9 MPa (G). Then the gas-liquid phase which separated out by jet flash is separated through gravity settling. The liquid phase undergoes centrifugal degassing in order to degass the distillate for the second time through swirling or the centrifugal pressure gradient, wherein the pressure difference in the pressure gradient field is 1.2 MPa. The liquid (distillate) then exists from the bottom of the device and the gas phase exists from the top after swirling. The hot high pressure separator has an operation temperature of 225-235 °C whereas the operation temperature of the hot low pressure separator is 205-215°C.

Effect: in comparison with the conventional technology (namely, the gas-liquid phase of the hot high pressure separator is separated via gravity settling, in the hot low pressure separator, jet flash is used to separate the gas phase from the liquid phase separated from the hot high pressure, then gravity settling is used to separate the gas-liquid phase), there exist the following advantages:
1. The built-in inertia separation distributor in the hot high pressure separator facilitates the separation effect of the gas and the liquid phase. Some of the hydrocarbons which were difficult to recover before can now be separated, which increases the efficiency of the hot high pressure separator.
2. Through the built-in jet flash separator in the hot low pressure separator, the jet flash effect is enhanced, which leads to an increased recovering rate of the hydrogen.
3. The centrifugal degassing technology before the hot low pressure separator increases the hydrogen recovering rate.

### Example 2:

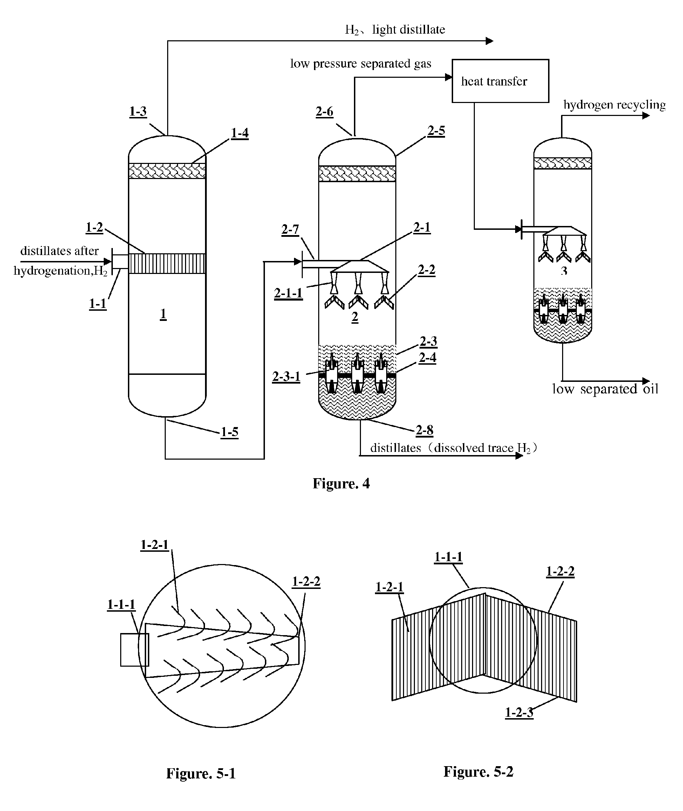

Fig. 4 refers to a second example of the current invention. Different from the first example, in the current example, at the outlet for the gas phase 2-6, the hot low pressure separator 2 is connected with a secondary hot low pressure separator 3 with the same structure through a heat exchanger. After coming out from the outlet for the gas phase of the hot low pressure separator 2, the low pressure separated gas undergoes heat exchange, wherein some hydrocarbons are changed into liquid phase. The hydrogen contained in the secondary hot low pressure separator 3 is further purified. In comparison with example 1, the present example further purifies hydrogen, is beneficial to hydrogen recovering.

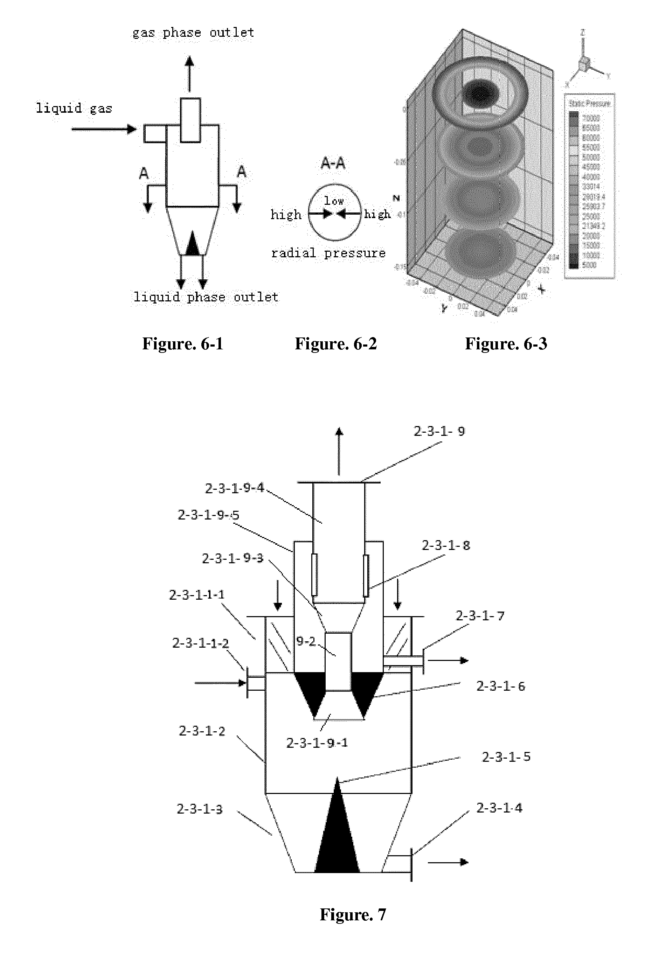

The hot low pressure separator is furnished with at least one centrifugal degassing core tube in front of the outlet for the liquid phase, wherein the centrifugal degassing core tube comprises a cavity, wherein the cavity is furnished with a slanted inlet for liquid and gas phase, and outlet for gas phase and an outlet for liquid phase, wherein the outlet for gas phase is inserted into the cavity through the upper surface of the cavity, wherein the depth of the insertion is around 0.1-3 times of the maximum diameter of the cavity. The insertion depth is the depth between the end of the outlet of the gas phase, namely the lowest point of the outlet of the gas phase in the cavity, and the upper surface of the cavity. The theory is shown in Fig. 6-1 to Fig. 6-3. The inventor of the current invention discovers that the height of the column cavity is 0.5-3 times the diameter of the column cavity. There exists obvious pressure gradient in the radial cross section of the swirler, namely the pressure decreases inwards radially. According to Henry law, close to the height of the cross section, the pressure in the outside wall of the swirler is high whereas the central pressure is low. The gas dissolved under the pressure of the outside wall can migrate to the central position. To position the outlet for the gas phase in this location can further remove the gas dissolved in the pressure at the inlet. The swirling degassing technology combines the centrifugal field with the pressure gradient to remove the gas dissolved in the carrying liquid as well as in the entrance liquid under the partial pressure.

Fig. 7 shows the details. Fig. 7 includes a cone shaped cavity 2-3-1-3 (it can also be a column cavity) at the bottom and a column shaped cavity 2-3-1-2 which is located above the cone shaped cavity and has an identical diameter and is connected with the cone shaped cavity, wherein the cone shaped cavity 2-3-1-3 and the column cavity 2-3-1-2 form a closed cavity. The closed cavity is furnished at the bottom an outlet for liquid phase 2-3-1-4. The upper part of the closed cavity is furnished with an inlet for liquid and gas and the upper part of the closed cavity is furnished with an outlet for the gas phase, wherein the outlet of the gas phase inserts into the closed cavity from the upper surface, wherein the depth of the insertion is 0.1-3 times and the insertion is located at the center of the cavity. The outlet of the gas phase has a shape of an inverted bell, wherein the cross section of its end faces the center of the lowest pressure of the pressure gradient of the radial cross section, in order to collect the gas phase formed due to the low pressure of the center of the pressure gradient. The outlet of the gas phase is realized through the spray of the secondary separation jet overflow pipe 2-3-1-9. As shown in the figure, the secondary separation jet overflow pipe 2-3-1-9 is located at the central axis of the column cavity 2-3-1-2, comprising a bell mouth 2-3-1-9-1, a column cavity of the first overflow pipe 2-3-1-9-2, an inverted cone shaped connection cavity 2-3-1-9-3, which a spraying cavity with a column cavity of the second overflow pipe 2-3-1-9-4, wherein the radius of the spraying cavity first decreases and then increases, which can increase the pressure of the outlet of the gas phase while increasing the collecting area of the gas and increasing the gas collecting efficiency. The second overflow pipe 2-3-1-9-4 is furnished with a circular groove gap 2-3-1-8 at its periphery. The circular groove gas 2-3-1-8 is surrounded by a barrel body 2-3-1-9-5 which forms a closed cavity. The barrel body 2-3-1-9-5 is furnished with an outlet for the secondary fluid 2-3-1-7 at its bottom, which is inside the second overflow pipe 2-3-1-9-4, in order to remove the liquid carried in the gas phase effectively using swirling centrifuge. This ensures an effective separation of the liquid from the gas phase, which solves the problem of secondary separation. The first overflow pipe 2-3-1-9-2 is furnished with a bell mouth 2-3-1-9-1 at its bottom, in order to catch gas to a maximum extent. The bell mouth 2-3-1-9-1 has a thick wall of the inverted cone of the overflow pipe 2-3-1-6, wherein the thick wall of the inverted cone of the overflow pipe 2-3-1-6 extends from the bell mouth 2-3-1-9-1 to the upper surface of the column cavity 2-3-1-2, in order to guide the liquid or gas which enters from the inlet located at the upper part or top of the cavity into the pressure gradient area and facilitate their separation. The inlet for liquid and gas can be tangent, axial flow type, screw type. The column shaped cavity 2-3-1-2 is furnished with an endocone 2-3-1-5. The bottom surface area of the endocone 2-3-1-5 is larger than the bottom surface area of the bell mouth 2-3-1-9-1, in order to reduce the gas carried in the liquid.

Fig.5-1 and Fig. 5-2 show the inertia separation distributor in the above examples. It includes inertia separation distributor blades -2-1, and an upper cover plate 1-2-2 which covers a plurality of inertia separation distributor blades 1-2-1, and a bottom cover plate 1-2-3 which locates below the inertia separation distributor blades 1-2-1. Each inertia guide blade 1-2-1 comprises a guide straight line section, an angle of semicircle and a distribution straight line section, wherein the guide straight line section is the section close to distributor. The inertia guide blades are symmetrically distributed along the central line of the cross section of the hot high pressure separator 1. The inertia distributor blade is each furnished with an upper cover plate and a bottom cover plate, wherein the upper cover plate and the lower cover plate are slanted to the edge, wherein the slanting angle is 3-60°C.

The above jet flash core tube can be an ejector, such as a Venturi ejector.

The examples of the current invention do not limit the scope of protection of the current invention.

## Claims

1. A method for improving the hydrogen utilization in a hydrogenation high pressure hot separation process, **characterized in that**, it comprises the following steps:
Step 1: distillate oil and hydrogen mixture undergo high pressure separation, comprising the following steps:
Step 1.1: the distill oil and hydrogen mixture undergoes inertial separation of distribution to realize initial gas-liquid separation, and the gas-liquid mixture after separation is radially uniformly distributed in a hot high-pressure separator, wherein the pressure drop of the inertial separation is 0.0001-0.01 MPa;
Step 1.2: the gas-liquid mixture after inertia separation undergoes a second gas-liquid separation via gravity settling;
Step 2: the liquid phase after high pressure separation undergoes hot low-pressure separation, comprising the following steps:
Step 2.1: the gas phase dissolved in the liquid phase is separated via jet flash, wherein the pressure drop is no higher than 0.01 MPa;
Step 2.2: the gas-liquid mixture after jet flash further undergoes gravity settling in order to separate the gas and the liquid phase, and the separated liquid phase undergoes second degassing through a centrifugal degassing device , wherein the degassing is carried out via hydrocyclone separation or pressure gradient, wherein the pressure difference within the pressure gradient field is 0.01-10 Mpa.

2. A device to carry out the method for improving the hydrogen utilization in a hydrogenation high pressure hot separation process according to claim 1, comprising a hot high pressure separator as well as a hot low pressure separator, wherein the hot high pressure separator is furnished with an inlet, an outlet for liquid phase and an outlet for gas phase, and the hot low pressure separator is furnished with an inlet, an outlet for liquid phase and an outlet for gas phase, and wherein the outlet for liquid phase of the hot high pressure separator is connected with the inlet of the hot low pressure separator, **characterized in that**,
- the hot low pressure separator is furnished with a jet flash separator at its inlet, wherein the jet flash separator comprises at least one jet flash core tub;
- the hot low pressure separator is furnished with at least one centrifugal degassing core tube in front of the outlet for the liquid phase, wherein the centrifugal degassing core tube comprises a cavity, wherein the cavity is furnished with a slanted inlet for liquid and gas phase, and outlet for gas phase and an outlet for liquid phase, wherein the outlet for gas phase is inserted into the cavity through the upper surface of the cavity, wherein the depth of the insertion is around 0.1-3 times of the maximum diameter of the cavity.

3. A device for improving the hydrogen utilization in a hydrogenation high pressure hot separation process according to claim 2, **characterized in that** the hot high pressure separator is vertical or horizontal, and is furnished with at least one inertia separation distributor, wherein the inertia separation distributor comprises a plurality of inertia separation distribution blades, an upper cover plate, and a lower cover plate on both sides of the inertia separation distributor, wherein each inertia guide blade comprises a guide straight line section, an angle of semicircle and a distribution straight line section, wherein the guide straight line section is the section close to distributor.

4. A device for improving the hydrogen utilization in a hydrogenation high pressure hot separation process according to claim 3, **characterized in that** the upper cover plate and the lower cover plate are slanted to the edge, wherein the slanting angle is 3-60°C.

5. A device for improving the hydrogen utilization in a hydrogenation addition high pressure hot separation process according to claim 2, **characterized in that** a gas-liquid separator is located at the outlet for gas phase of the hot high pressure separator and/or the outlet for liquid phase of the hot low pressure separator.

6. A device for improving the hydrogen utilization in a hydrogenation addition high pressure hot separation process according to claim 5, **characterized in that** the gas-liquid separator is a swirling flow separator or a coalescence separator.

7. A device for improving the hydrogen utilization in a hydrogenation addition high pressure hot separation process according to claim 2, **characterized in that** the hot low pressure separator comprises a plurality of jet flash core tubes.

8. A device for improving the hydrogen utilization in a hydrogenation addition high pressure hot separation process according to claim 2, **characterized in that** the jet flash separator is furnished with a corresponding umbrella-formed liquid distributor at its outlet, wherein the surface area of the umbrella-formed liquid distributor is 1-30 times of the outlet surface of the jet flash core tube.

9. A device for improving the hydrogen utilization in a hydrogenation addition high pressure hot separation process according to claim 2, **characterized in that** the hot low pressure separator comprises a plurality of centrifugal degassing core tubes, wherein the centrifugal degassing core tubes are parallel connected with each other,

10. A device for improving the hydrogen utilization in a hydrogenation addition high pressure hot separation process according to claim 1, **characterized in that** the hot low pressure separator is furnished with a baffle plate which divides the hot low pressure separator into two chambers, wherein the height of the baffle plate corresponds to the height of the centrifugal degassing core tubes in order to keep the inlet of the centrifugal degassing core tube and the liquid phase outlet in two different chambers.
